# EUROPEAN PATENT APPLICATION

(11) **EP 1 916 756 A2**
(43) Date of publication of application: **30.04.2008**
(21) Application number: 07118734.8
(22) Date of filing: 18.10.2007
(51) Int. Cl.: H02K 5/22

(54) **Assembly for connecting the electrical stator windings of an electric motor**

(30) Priority: 24.10.2006 IT PD20060395
(71) Applicant: Inarca S.p.A., 35010 Vigodarzere (PD) (IT)
(72) Inventor: Boischio, Ido, 35100, PADOVA (IT)
(74) Representative: Modiano, Micaela Nadia

(57) **Abstract**

An assembly (10) for connecting the stator windings of an electric motor to the respective power supply, comprising a first box-like connector (11) provided with first internal passages (12) for accommodating respective first electrical terminals (13), which is substantially L-shaped. The first connector (11) has means (14) for engaging the stator which are adapted to arrange the first connector (11) so that the first part (11a) is perpendicular to the axis (A) of the electric motor. At the end of the first part (11a) of the first connector (11) there is a coupling cavity (16) for at least one second box-like connector (17) provided with second internal passages (18) for accommodating corresponding second electrical terminals (19) for coupling to the first electrical terminals (13); the direction of insertion of the second connector (17) is substantially perpendicular to the axis (A) of the electric motor. Each first electrical terminal (13) is constituted by a central flat body (20), from a first end of which there protrudes, in a coplanar manner, a flat pin (21) for electrical contact with a respective second electrical terminal (19), and from a second opposite end of which a crimping portion (22) protrudes in a coplanar manner and along a direction which is perpendicular to the arrangement of the flat pin (21).

## Description

The present invention relates to an assembly for connecting the electrical stator windings of an electric motor to the respective power supply.

It is known that the connection of the stator windings of an electric motor to the respective power supply can occur manually, or, as in recent times and in the case of a large number of connections, in an automated manner.

Automated connection provides for the use of a first box-like connector made of plastic material, which is fixed to the stator and which accommodates internally, in respective passages, first electrical terminals to which wires connected to the windings are crimped, and a second box-like connector, inside which there are second electrical terminals to which the wires connected to the power supply are crimped; the first connector is coupled stably to the second connector and the respective terminals are also coupled.

The coupling of the connectors generally occurs along a direction which is parallel to the axis of the electric motor or along a direction which is perpendicular thereto.

In this last case, the structures of known types of connection assembly are generally complicated and automatic assembly of the various components is not always easy to provide.

Moreover, in some cases, in certain applications, during the automated connection of the second connector to the first connector, the electrical terminals of the latter, due to incorrect positioning or dimensional defects of the connectors, may tend to shift within their containment passage, causing jamming during connection.

The aim of the present invention is to solve the problems noted during the connection of the stator windings of an electric motor to the respective power supply.

Within this aim, an object of the present invention is to provide a connection assembly for the stator windings of an electric motor which is structurally simple and allows easy assembly of the components of the assembly.

Another object of the present invention is to provide a connection assembly which is stable during use.

This aim and these and other objects which will become better apparent hereinafter are achieved by an assembly for connecting the stator windings of an electric motor to the respective power supply, characterized in that it comprises a first box-like connector provided with first internal passages for accommodating respective first electrical terminals, said first connector being substantially L-shaped and having two main parts which form said L-shape, a first part and a second part arranged at right angles to the first part, said first connector being provided with means for engaging the stator which are adapted to arrange said first connector so that said first part is perpendicular to the axis of the electric motor, at the end of the first part of said first connector there being a coupling cavity for at least one second box-like connector provided with second internal passages for accommodating corresponding second electrical terminals for coupling to said first electrical terminals, the direction of insertion of said second connector being substantially perpendicular to the axis of the electric motor, each of said first electrical terminals being constituted by a central flat body from a first end of which there protrudes, in a coplanar manner, a flat pin for electrical contact with a respective said second electrical terminal and from a second opposite end of which a crimping portion protrudes in a coplanar manner and along a direction which is perpendicular to the arrangement of said flat pin, an elastically deformable tooth protruding from one side of said central flat body along a direction which is incident to the plane of said central flat body, the free end of said tooth abutting against a shoulder which is undercut with respect to the direction of extraction of said first terminal from its first passage, so as to prevent its extraction, lateral guiding walls for said flat pins protruding from the bottom of said cavity and guiding two first mutually opposite sides of said flat pins, while the second opposite sides are free to allow electrical contact with said second electrical terminals.

Further characteristics and advantages of the invention will become better apparent from the following detailed description of a preferred but not exclusive embodiment thereof, illustrated by way of non-limiting example in the accompanying drawings, wherein:
Figure 1 is a sectional side view of a connection assembly according to the invention;
Figure 2 is a perspective view of a box-like connector which composes the connection assembly of Figure 1;
Figure 3 is a top view of an electrical terminal which composes the connection assembly of Figure 1;
Figure 4 is a sectional view of the terminal of Figure 3, taken along the line IV-IV;

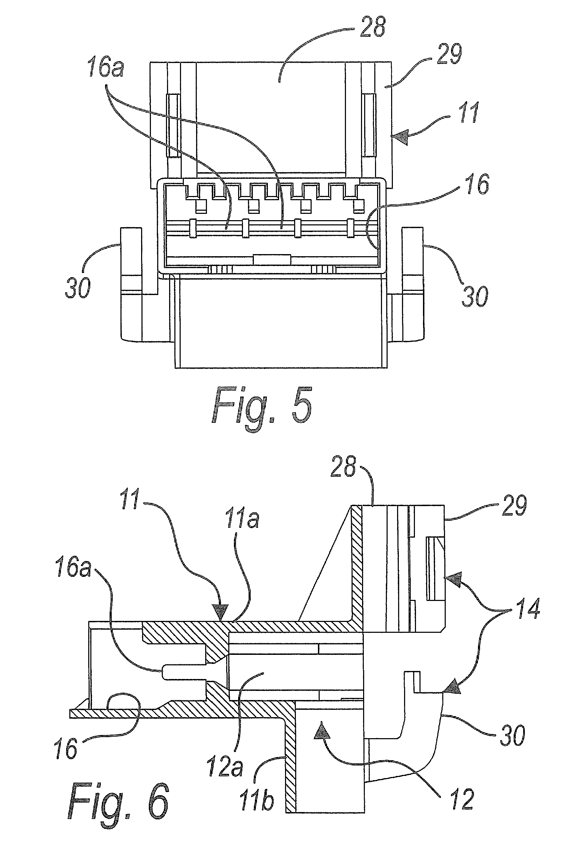

Figure 5 is a front view of a connector to be fixed to the stator of the connection assembly of the preceding figures;
Figure 6 is a sectional side view of the connector of Figure 5.

It is noted that anything found to be already known during the patenting process is understood not to be claimed and to be the subject of a disclaimer.

With reference to the figures, a connection assembly according to the invention is generally designated by the reference numeral 10.

The connection assembly 10 comprises a first box-like connector 11 provided internally with first internal passages 12 for accommodating respective first electrical terminals 13.

The first connector 11 is substantially L-shaped and has two main parts which form said L-shape: a first part 11a and a second part 11b, which protrudes at right angles to the first part 11a.

Each first internal passage 12 is also L-shaped and therefore has a first passage portion 12a and a second passage portion 12b which are mutually perpendicular; each first terminal 13 is accommodated in both portions 12a and 12b of the respective first internal passage 12.

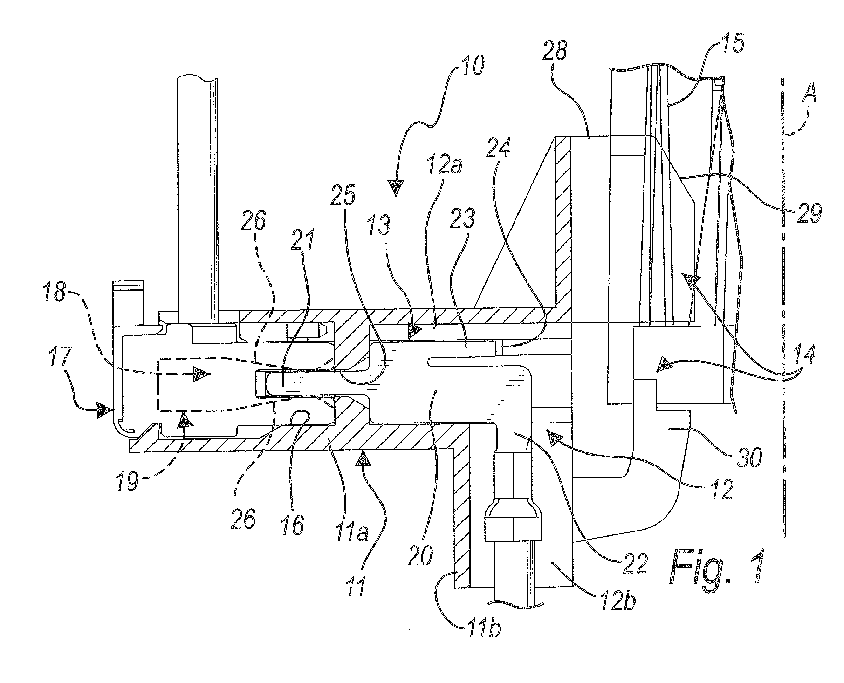

The first connector 11 is provided with means 14 for engaging with the stator, which are described in greater detail hereinafter (in particular, said means interact with portions of a dome made of plastic material, designated by the reference numeral 15 in Figure 1, for covering the stator).

The engagement means 14 are adapted to arrange the first connector so that the first part 11 a is perpendicular to the axis of the electric motor (a direction which is parallel to said axis is indicated in Figure 1 by a line shown schematically in dots and dashes and designated by the reference letter A); accordingly, the second part 11b of the connector 11 is parallel to said axis.

The portions 12a and 12b of the first internal passages 12 are open in the direction for engaging the stator assembly in order to be able to insert the respective first terminals 13.

At the end of the first part 11 a of the first connector 11 there is a coupling cavity 16 for at least one second box-like connector 17 (not shown in cross-section in the figures), which is provided with second internal passages 18 (indicated by an arrow drawn in broken lines) for accommodating corresponding second electrical terminals (one of which is shown schematically by means of broken lines and is designated by the reference numeral 19) for coupling to the first electrical terminals 13.

The direction of insertion of the second connector 17 is substantially perpendicular to the axis of the electric motor.

Each first electrical terminal 13 is constituted by a central flat body 20, from a first end of which there protrudes, in a coplanar manner, a flat pin 21 for electrical contact with a respective second electrical terminal 19 and from a second opposite end of which a crimping portion 22 protrudes in a coplanar manner and along a direction which is perpendicular to the extension of the flat pin 21.

An elastically deformable tooth 23 protrudes from one side of the central flat body 20 along a direction which is incident to the plane of the central flat body 20; the free end of said tooth abuts against a shoulder 24 which is undercut with respect to the direction of extraction of the first terminal 13 from its first passage 13, so as to prevent its extraction; the tooth 23 is constituted by a portion of the central flat body 20 which is wing-shaped, partially cut by blanking and folded so as to rise from the planar arrangement of the central flat body 20.

In particular, the central flat body 20 with the flat pin 21 is accommodated in the first passage portion 12a, while the crimping portion 22 is accommodated in the second passage portion 12b.

An opening 25 is provided between the cavity 16 and the first passage portion 12a to allow the passage of the flat pin 21 in the cavity 16 and allow connection to the respective second terminal 19.

The second electrical terminals 19 have a portion for connection to the first terminals 13, which consists of a pair of mutually opposite wings 26 (shown schematically in broken lines in Figure 1) which clamp the flat pins 21 of the first electrical terminals 13 and are connected to the power supply of the motor.

In order to prevent the flat pins 21 of the first electrical terminals 13 from oscillating excessively within the cavity 16, with the risk of bending during the coupling of the second connector 17 to the first connector 11, lateral guiding walls 16a for the flat pins 21 protrude from the bottom of the cavity 16.

The lateral guiding walls 16a guide two first mutually opposite sides 21a of the flat pins 21, while the second mutually opposite sides 21b are free in order to allow electrical contact with the second electrical terminals 19.

In particular, the width of the lateral guiding walls 16a is narrower than the distance between the second mutually opposite sides 21b, thus allowing to protrude from the walls 16a and ensure electrical contact with the second electrical terminals 19.

It should be noted that said walls provide a discontinuous crossmember on the bottom of the cavity 16.

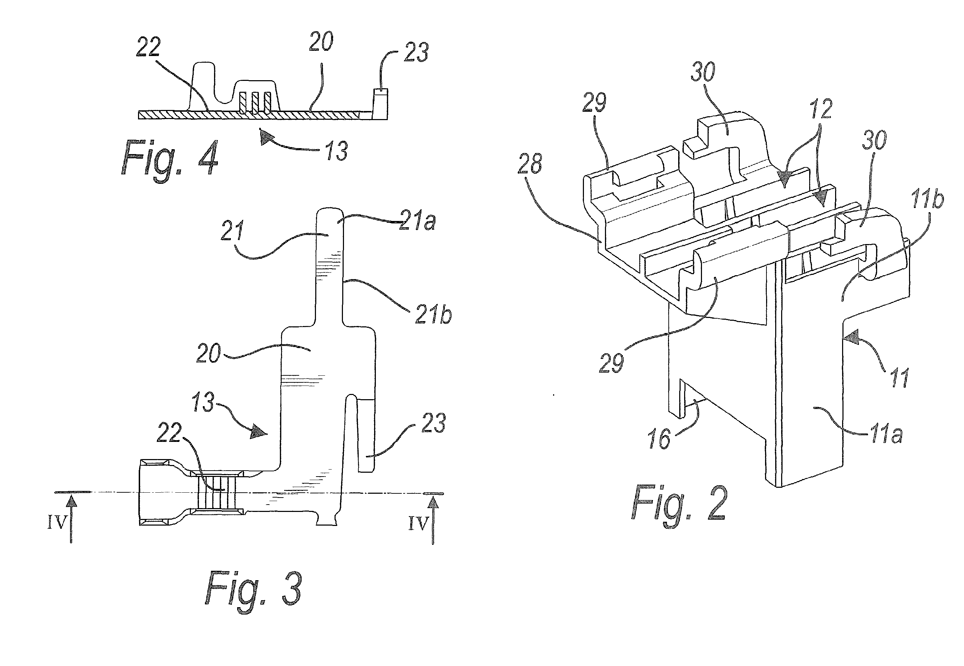

The engagement means 14 (clearly shown in Figure 2) comprise for example a frame 28 provided with two wings 29 which form a C-shape which is adapted to couple by snap action to the stator assembly; the frame 28 protrudes from the face of the first part 11a of the first connector 11 which lies opposite the second part 11b.

The engagement means 14 also comprise two tabs 30, which protrude from the mutually opposite sides of the second parts 11b of the connector 11 toward the frame 28 and are adapted to be inserted in corresponding receptacles provided in the stator assembly (not shown in the figures).

In practice it has been found that the invention thus described achieves the intended aim and objects.

The present invention has in fact provided an assembly for connecting the electrical windings of the stator of an electric motor to the respective power supply which is structurally simple and at the same time allows easy assembly of the components of the assembly and considerable stability of the connection during use.

This has been provided in practice by combining an L-shaped configuration of the first connector with an L-shaped configuration of the corresponding first terminals, which have a lateral tooth which is shaped in an optimum manner to avoid disengagement of said terminals from the passages.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000395 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An assembly for connecting the stator windings of an electric motor to the respective power supply, **characterized in that** it comprises a first box-like connector (11) provided with first internal passages (12) for accommodating respective first electrical terminals (13), said first connector (11) being substantially L-shaped and having two main parts which form said L-shape, a first part (11a) and a second part (11b) arranged at right angles to the first part (11a), said first connector (11) being provided with means (14) for engaging the stator which are adapted to arrange said first connector (11) so that said first part (11a) is perpendicular to the axis (A) of the electric motor, at the end of the first part (11 a) of said first connector (11) there being a coupling cavity (16) for at least one second box-like connector (17) provided with second internal passages (18) for accommodating corresponding second electrical terminals (19) for coupling to said first electrical terminals (13), the direction of insertion of said second connector (17) being substantially perpendicular to the axis (A) of the electric motor, each of said first electrical terminals (13) being constituted by a central flat body (20) from a first end of which there protrudes, in a coplanar manner, a flat pin (21) for electrical contact with a respective said second electrical terminal (19) and from a second opposite end of which a crimping portion (22) protrudes in a coplanar manner and along a direction which is perpendicular to the arrangement of said flat pin (21), an elastically deformable tooth (23) protruding from one side of said central flat body (20) along a direction which is incident to the plane of said central flat body (20), the free end of said tooth abutting against a shoulder (24) which is undercut with respect to the direction of extraction of said first terminal (13) from its first passage (13), so as to prevent its extraction, lateral guiding walls (16a) for said flat pins (21) protruding from the bottom of said cavity (16) and guiding two first mutually opposite sides (21a) of said flat pins (21), while the second opposite sides (21b) are free to allow electrical contact with said second electrical terminals (19).

2. The connection assembly according to claim 1, **characterized in that** said tooth (23) is constituted by a portion of the central flat body (20) which is wing-shaped, partially cut by blanking and folded so as to rise from the planar arrangement of said central flat body (20).

3. The connection assembly according to one of the preceding claims, **characterized in that** each said first internal passage (12) is also L-shaped and has a first passage portion (12a) and a second passage portion (12b) which are mutually perpendicular, said central flat body (20) with said flat pin (21) being accommodated within the first passage portion (12a), while the crimping portion (22) is accommodated in the second passage portion (12b), said passage portions (12a, 12b) of said first internal passages (12) being open in the direction for engaging the stator assembly in order to be able to insert the respective said first terminals (13).

4. The connection assembly according to claim 3, **characterized in that** between said cavity (16) and said first passage portion (12a) there is an opening (25) to allow the passage of said flat pin (21) in said cavity (16) and allow connection to the respective said second terminal (19), each said second electrical terminal (19) having a portion for connection to the respective said first terminal (13) which consists of a pair of mutually opposite wings (26) which clamp said flat pin (21) of the respective first electrical terminal (13).

5. The connection assembly according to one of the preceding claims, **characterized in that** said engagement means (14) comprise a frame (28) provided with two wings (29) which form a C-shape which is adapted to couple by snap action to the stator assembly, said frame (28) protruding from the face of said first part (11a) of the first connector (11) which lies opposite said second part (11b), said engagement means (14) further comprising two tabs (30), which protrude from the mutually opposite sides of said second part (11b) of the first connector (11) toward said frame (28) and are adapted to be inserted in corresponding receptacles provided in the stator assembly.

6. The connection assembly according to claim 1, **characterized in that** the width of said lateral guiding walls (16a) is smaller than the distance between said second mutually opposite sides (21b), thus allowing to protrude from said walls (16a) and ensure electrical contact with said second electrical terminals (19).
